# EUROPEAN PATENT SPECIFICATION

(11) **EP 2 372 956 B1**
(45) Date of publication and mention of the grant of the patent: **25.03.2020**
(21) Application number: 09835140.6
(22) Date of filing: 26.05.2009
(51) Int. Cl.: H04L 12/28, H04L 25/49, H04L 27/18, H04W 28/06, H04L 29/06

(54) **METHOD FOR CONFIGURING PHYSICAL LAYER OF LOW FREQUENCY BAND BASED ON WIRELESS MAGNETIC FIELD COMMUNICATION, AND COMPUTER-READABLE RECORDING MEDIUM INCLUDING PROGRAM FOR EXECUTING THE METHOD**
VERFAHREN ZUR KONFIGURATION DER PHYSISCHEN SCHICHT DES NIEDERFREQUENZBANDS AUF DER BASIS VON DRAHTLOSER MAGNETFELDKOMMUNIKATION UND COMPUTERLESBARES AUFZEICHNUNGSMEDIUM MIT EINEM PROGRAMM ZUM AUSFÜHREN DES VERFAHRENS
PROCÉDÉ DE CONFIGURATION D'UNE COUCHE PHYSIQUE DE BANDE BASSE FRÉQUENCE SUR LA BASE D'UNE COMMUNICATION SANS FIL PAR CHAMP MAGNÉTIQUE, ET SUPPORT D'ENREGISTREMENT LISIBLE PAR ORDINATEUR COMPRENANT UN PROGRAMME DESTINÉ À EXÉCUTER LE PROCÉDÉ

(30) Priority: 23.12.2008 KR 20080131920
(43) Date of publication of application: 05.10.2011
(73) Proprietor: Korea Electronics Technology Institute, Gyeonggi-do 463-816 (KR)
(72) Inventor: KIM, Sun-hee, Seoul 122-010 (KR); WON, Yun-jae, Yongin-si Gyeonggi-do 448-130 (KR); LIM, Seung-ok, Seongnam-si Gyeonggi-do 463-942 (KR)
(74) Representative: Vossius & Partner Patentanwälte Rechtsanwälte mbB
(86) International application number: PCT/KR2009/002783
(87) International publication number: WO 2010/074374

(56) References cited:
- EP-A1- 0 857 400
- KR-B1- 100 451 118
- "ISO/IEC 1800-2 Information technology Radio frequency identification for item management Part 2: Parameters for air interface communications below 135 kHz", INTERNATIONAL STANDARD ISO/IEC, XX, XX , vol. ISO/IEC 18000-2 1 January 2004 (2004-01-01), pages 1-80, XP008149697, Retrieved from the Internet: URL:www.youwokeji.com.cn/down/18000-2.pdf
- INTERNATIONAL STANDARD ISO/IEC 18000-2 15 September 2004, XP008149697
- '2008. ICACT 2008. lOth International Conference on', vol. 1, 2008. 02. 17', deel KYESEON LEE ET AL.: ''Experience of USN MAC based on 424MHz band IEEE 802.15.4', Advanced Communication Technology', pages 350 - 353, XP031245163

## Description

### Technical Field

The present invention relates to a method of configuring a physical layer in magnetic field-based low-frequency wireless communication and a computer-readable recording medium storing a program for executing the method, and more particularly, to a method of configuring a physical layer in magnetic field-based low-frequency wireless communication, which is capable of efficiently supporting magnetic field-based low-frequency wireless communication that is applied to a poor environment and a computer-readable recording medium storing a program for executing the method.

### Background Art

As is well known, radio frequency identification (RFID) is ubiquitous computing-based technology in which identification information is input to tags, that is, very small semiconductors, and objects, animals, and/or humans having such tags are read, tracked, and managed using a wireless frequency. Such RFID technologies may be classified into an active type, a passive type, or a semiactive type depending on whether tags operate using their own power or using energy obtained from radio waves received from interrogators. Furthermore, depending on the application field or identification distance, a low frequency (LF) in a band equal to or lower than 135KHz, a high frequency (HF) in a 13.56MHz band, an ultra high frequency (UHF) in a 433.92MHz or 860∼960MHz band, or a microwave radio frequency in a 2.45GHz band is used. Among these technologies, an RFID technology using a low frequency (LF) in a band equal to or lower than 135KHz operates based on a magnetic field, and therefore it is resistant to the influence of a surrounding environment, with the result that it can be effectively used to identify underground objects, such as oil pipelines or water/sewage lines covered with soil or concrete, or objects in various types of poor environments, such as a water, metal, or in a disaster environment. The specifications of the physical (PHY) layer thereof, that is, the air interface thereof, are stipulated in ISO/IEC 18000-2 (hereinafter referred to as "conventional technology") in detail.

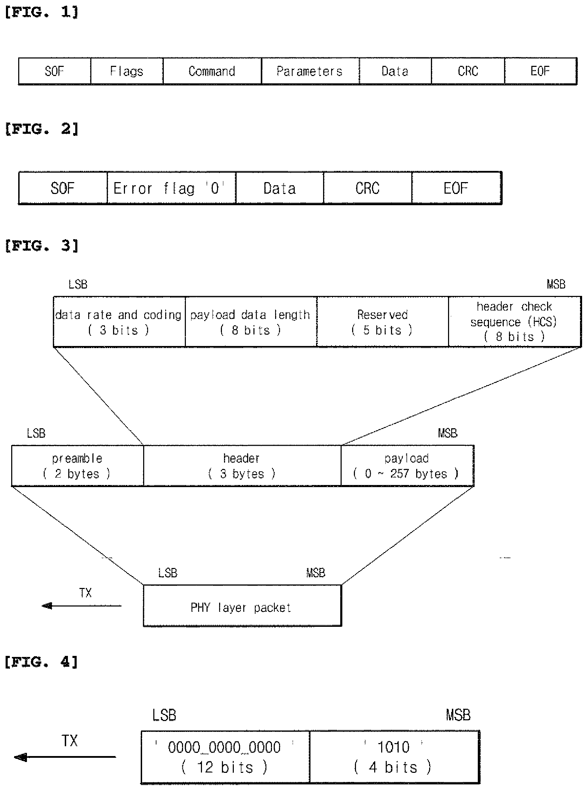

Fig. 1 is a diagram showing the frame configuration of a general request format sent from a master to a slave in an interface method for the conventional low-frequency wireless communication, and Fig. 2 is a diagram showing the frame configuration of a general response format sent from the slave to the master in the air interface method for the conventional low-frequency wireless communication. In accordance with the air interface method for the conventional low-frequency wireless communication, the packet format, coding method, and data rate of the master are not the same as those of the slave, and passive tags are used.

First, when a master, for example, an RFID interrogator, sends a command to a tag, that is, a slave, the general request format shown in Fig. 1 is used. In this case, pulse interval encoding (PIE) is used as a data coding method, and an average data rate is about 5.1kbps. In contrast, when the slave sends a response to the command of Fig. 1, the general response format shown in Fig. 2 is used. Each command of an interrogator is classified as an inventory command or an international standard command. When a response to an inventory command is sent, dual pattern data coding at 2kbps is used. In contrast, when a response to an international standard command is sent, Manchester coding at 4kbps is used.

Furthermore, the conventional technology defines two types of tags, including an A-type FDX tag and a B-type HDX tag. An A-type tag is always supplied with power by an interrogator, including during communication between the tag and the interrogator, whereas a B-type tag is supplied with power by an interrogator in a period other than during communication between the tag and the interrogator. An A-type tag uses Manchester coding and amplitude shift keying (ASK) modulation as data coding and modulation methods, whereas a B-type tag uses non-return-to-zero (NRZ) coding and frequency shift keying (FSK) modulation.

As described above, the conventional technology cannot actively adapt to a surrounding communication environment and perform efficient communication because the data rate between a master and a slave is fixed to a single value, and data coding and modulation methods are also fixed without allowing selection.

Moreover, the conventional technology is problematic in that the length of a response frame is restricted because a slave, for example, a tag, is defined as a passive type and in an application field is restricted because it is impossible to perform active communication to a master, for example, an interrogator.

EP 0 857 400 A1 discloses an apparatus for communicating data packets in variable length bursts over a physical layer in a multi layer data communication scheme. Each burst contains an information data and an overhead including forward error control (FEC) data. Different burst modes are provided to enable a trade-off to be made between bandwidth efficiency and data transmission robustness.

### Disclosure

### Technical Problem

Accordingly, the present invention has been made keeping in mind the above problems occurring in the prior art, and an object of the present invention is to provide a method of configuring a physical layer in magnetic field-based low-frequency wireless communication, which can support an appropriate packet format, coding, and modulation between a master and a slave in order to perform wireless communication using a data rate and a coding method that varies depending on a surrounding environment in magnetic field-based low-frequency wireless communication that is applied to a poor environment, and a computer-readable recording medium storing a program for executing the method.

### Technical Solution

In order to accomplish the above object, the present invention provides a method of configuring a physical layer in magnetic field-based low-frequency wireless communication, wherein a data rate and coding method of a payload field included in each of request and response frames exchanged between a master and a slave can vary depending on a surrounding communication environment within a predetermined range.

In the above configuration, the request and response frames may be configured in the same format. The request and response frames each include a preamble field, a header field, and a payload field. Meanwhile, the preamble field may include a fixed 16-bit sequence. The preamble field may be subjected to Manchester coding at a data rate of 1 kbps and then BPSK modulation.

Meanwhile, the header field may include an area indicative of data rate and coding information of the payload field, an area indicative of data length of the payload field, and a header check sequence (HCS). The header field may be subjected to Manchester coding at a data rate of 1 kbps and then binary phase shifting keying (BPSK) modulation.

Meanwhile, the payload field may include a 0∼255-byte data area and a 2-byte frame check sequence. The payload field may be subjected to a selective one of Manchester coding at a data rate of 1, 2 or 4 kbps or NRZ-L coding at a data rate of 2, 4 or 8 kbps and then BPSK modulation.

Furthermore, the results of the NRZ-L coding may be scrambled and then subjected to the BPSK modulation.

### Advantageous Effects

The method of configuring a physical layer in magnetic field-based low-frequency wireless communication and the computer-readable recording medium storing a program for executing the method according to the present invention can support an appropriate packet format, coding, and modulation between a master and a slave in order to perform wireless communication using a data rate and a coding method that varies depending on a surrounding environment in magnetic field-based low-frequency wireless communication that is applied to a poor environment, thereby improving communication performance and efficiency.

### Description of Drawings

Fig. 1 is a diagram showing the frame configuration of a general request format sent from a master to a slave in an interface method for conventional low-frequency wireless communication;
Fig. 2 is a diagram showing the frame configuration of a general response format sent from the slave to the master in an air interface method for the conventional low-frequency wireless communication;
Fig. 3 is a diagram showing the frame configuration of a format of bidirectional communication between a master and a slave in a method of configuring a physical layer in magnetic field-based low-frequency wireless communication according to the present invention;
Fig. 4 is a diagram showing the frame configuration of the preamble field shown in Fig. 3;
Fig. 5 is a diagram showing the frame configuration of the payload field shown in Fig. 3;
Fig. 6 is a diagram illustrating Manchester coding and NRZ-1 coding that may be applied to the method of the present invention;
Fig. 7 is a block diagram showing a scrambler that may be applied to the present invention;
Fig. 8 is a diagram illustrating a process of coding and modulating a preamble in the method of the present invention;
Fig. 9 is a diagram illustrating a process of coding and modulating a header in the method of the present invention; and
Fig. 10 is a diagram illustrating a process of coding and modulating in the method of the present invention.

### Mode for Invention

A preferred embodiment of a method of configuring a physical layer in magnetic field-based low-frequency wireless communication according to the present invention will be described in detail with reference to the accompanying drawings.

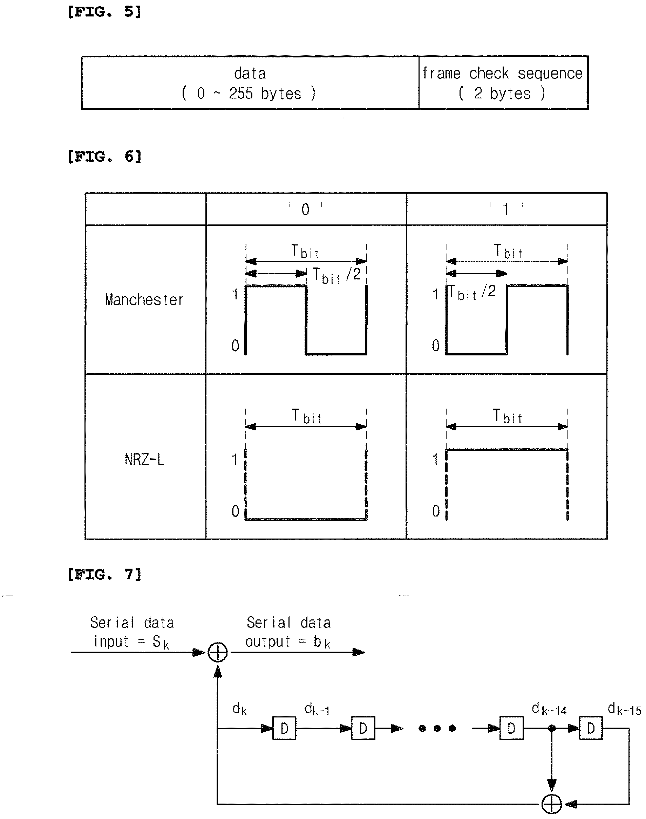

Fig. 3 is a diagram showing the frame configuration of the format of bidirectional communication between a master and a slave in the method of configuring a physical layer in magnetic field-based low-frequency wireless communication according to the present invention, Fig. 4 is a diagram showing the frame configuration of the preamble field shown in Fig. 3, and Fig. 5 is a diagram showing the frame configuration of the payload field shown in Fig. 3. First, as shown in Fig. 3, in accordance with the method of configuring a physical layer in magnetic field-based low-frequency wireless communication, it is preferred that the bidirectional communication frames sent between the master and the slave be configured in the same format. Since the length of a communication frame sent from the master to the slave is long, it is preferred to implement a slave, for example, a tag, as an active-type slave that can operate using its own power. It will be apparent that such a slave may be implemented as a passive-type slave or a semiactive-type slave that can variably operate as a passive-type slave or an active-type slave depending on the length of data.

Referring back to Fig. 3, a communication frame may sequentially include a preamble, a header, and payload fields. Here, the preamble field performs the same function as the start of frame (SOF) field of a conventional general request format or a general response format. The preamble field is configured in sequence from the least significant bit (LSB) to the most significant bit (MSB). A preamble includes the 12-bit sequence "000000000000" and the 4-bit sequence "1010."

Next, the header field may include a total of 3 bytes, as shown in Fig. 3. The header field may be configured in sequence from the LSB to the MSB, and may include, for example, a 3-bit data rate and coding information area, an 8-bit payload data length area, a 5-bit reserved area, and an 8-bit header check sequence (HCS). In the header field, the 8-bit payload data length area represents the length of data that is included in payload in bytes. The HCS may include, for example, an 8-bit cyclic redundancy check (CRC).

Finally, the payload field may include a data area of a maximum of 255 bytes, for example, a 2-byte frame check sequence for protecting the data area. When the length of data is 0, it is apparent that a frame check sequence is not also included. The data rates and coding methods of the above preamble, header, and payload fields are represented using 3 bits, and can support 8 methods, as shown in the following Table 1.

**Table 1**

| Data rate and coding | Data rate | Coding method |
|---|---|---|
| b2b1b0=000 (type 0) | 1kbit/s | Manchester |
| b2b1b0=001 (type 1) | 2kbits/s | Manchester |
| b2b1b0=010 (type 2) | 4kbits/s | Manchester |
| b2b1b0=011 (type 3) | 2kbits/s | NRZ-L + scrambling |
| b2b1b0=100 (type 4) | 4kbits/s | NRZ-L + scrambling |
| b2b1b0=101 (type 5) | 8kbits/s | NRZ-L + scrambling |
| b2b1b0=110 (type 6) | Reserved | - |
| b2b1b0=111 (type 7) | Reserved | - |

As described in the above Table 1, either one of Manchester coding and non-return-to-zero Level (NRZ-L) coding may be selected as the coding method according to the method of the present invention.

Fig. 6 is a diagram illustrating Manchester coding and NRZ-1 coding that may be applied to the method of the present invention. As shown in Fig. 6, in Manchester coding, a signal level changes in the middle of a bit interval. When the data bit is "0," level "1" changes to level "0." In contrast, when the data bit is "1," level "0" changes to level "1." In NRZ-L coding, when the data bit is "0," matching to level "0" is performed. When the data bit is "1," matching to "1" is performed. As a result, Manchester coding is more advantageous than NRZ-L coding in that the former has fewer DC components than the latter, whereas Manchester coding is more disadvantageous than NRZ-L coding in that the former uses a frequency band that is twice that of the latter. Accordingly, the coding method may be flexibly used in such a way that NRZ-L coding is used if a communication environment is good while Manchester coding is used if a communication environment is poor.

Fig. 7 is a block diagram showing a scrambler that may be applied to the present invention. As described above, NRZ-L coding is more disadvantageous than Manchester coding in that the former has more DC components than the latter. In order to overcome this disadvantage, it is preferable to suppress DC components by processing NRZ-L coding results using the scrambler, as shown in Fig. 7.

Here, the "scrambler" is a known circuit that converts input data into a series of random codes in order to prevent timing information from being lost from the input data and in order to prevent cross modulation from occurring in a transmission path interval by suppressing single frequency components that are produced by repeating a periodic data pattern. A receiving side, that is, the master or the slave, may reproduce original data signals using a descrambler having the opposite computational functionality.

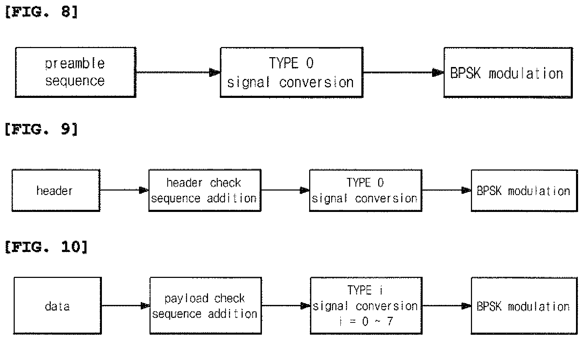

Fig. 8 is a diagram illustrating a process of coding and modulating a preamble in the method of the present invention, Fig. 9 is a diagram illustrating a process of coding and modulating a header in the method of the present invention, and Fig. 10 is a diagram illustrating a process of coding and modulating in the method of the present invention.

First, as shown in Fig. 8, in the method of the present invention, the process of coding and modulating a preamble field is performed by coding a generated preamble sequence using type 0 of Table 1, that is, Manchester coding having a data rate of 1kbps, and then performing BPSK modulation. Likewise, the process of coding and modulating a header field is performed by adding a protective HCS to a generated header sequence, performing type 0 of Table 1, that is, Manchester coding having a data rate of 1kbps, and then performing BPSK modulation.

In contrast, in the case of the payload field, a protective payload check sequence is added to the top of data, an appropriate data rate and coding method are selected from among types 0 to 7 in Table 1 and then performed, and then BPSK modulation is performed on coding results.

In the method of the present invention, a preamble field and a header field are coded at a low data rate using a Manchester coding method that is stable with respect to cross-modulation interference regardless of a surrounding communication environment, whereas a payload field is coded using an appropriate data rate and coding method depending on a communication environment. Furthermore, binary phase shift keying (BPSK) modulation is employed so communication performance can not only be improved accordingly, but so it is also possible to adaptively deal with a surrounding communication environment.

In the method of configuring a physical layer in magnetic field-based low-frequency wireless communication according to the present invention, the slave, for example, a tag, may be configured as an active-type tag, so that the tag may issue a command to the interrogator, with the result that the appropriate data rate and coding method of the payload field may be actively performed by not only the master but also by the slave.

The method of configuring a physical layer in magnetic field-based low-frequency wireless communication and a computer-readable recording medium including a program for executing the method according to the present invention is not limited to the above-described embodiment, but may be modified and practiced in various manners within the range that does not depart from the technical spirit of the present invention.

## Claims

1. A method of configuring a physical layer in magnetic field-based low-frequency wireless communication, wherein a data rate and coding method of a payload field included in each of request and response frames exchanged between a master and a slave can be varied depending on a surrounding communication environment within a predetermined range,
wherein the coding method uses a NRZ-L coding when the communication environment is determined as good, and uses Manchester coding when the communication environment is determined as poor,
wherein the request and response frames are configured in an identical format,
wherein the request and response frames each comprise a preamble field, a header field, and a payload field,
wherein the preamble field is subjected to Manchester coding at a data rate of 1kbps and then BPSK modulation,
wherein the header field comprises an area indicative of data rate and said coding method of the payload field, an area indicative of data length of the payload field, and a header check sequence (HCS),
wherein the header field is subjected to Manchester coding at a data rate of 1kbps and then binary phase shift keying (BPSK) modulation.

2. The method as set forth in claim 1, wherein the payload field comprises a 0∼255-byte data area and a 2-byte frame check sequence.

3. The method as set forth in claim 2, wherein the payload field is subjected to a selective one of Manchester coding at a data rate of 1, 2, or 4kbps or NRZ-L coding at a data rate of 2, 4, or 8kbps and then BPSK modulation.

4. The method as set forth in claim 3, wherein results of the NRZ-L coding is scrambled and then subjected to the BPSK modulation.

5. A computer-readable recording medium storing a program for executing the method set forth in any one of claims 1 to 4.

## Patentansprüche

1. Verfahren zum Konfigurieren einer physikalischen Schicht in einer magnetfeldbasierten drahtlosen Niederfrequenzkommunikation, wobei eine Datenrate und ein Codierungsverfahren eines Nutzdatenfelds, das jeweils in Anforderungs- und Antwortrahmen enthalten ist, die zwischen einem Master und einem Slave ausgetauscht werden, abhängig von einer umgebenden Kommunikationsumgebung innerhalb eines vorgegebenen Bereichs geändert werden können,
wobei das Codierungsverfahren eine NRZ-L-Codierung verwendet, wenn festgestellt wird, dass die Kommunikationsumgebung gut ist, und eine Manchester-Codierung verwendet, wenn festgestellt wird, dass die Kommunikationsumgebung schlecht ist,
wobei die Anforderungs- und Antwortrahmen in einem identischen Format konfiguriert sind,
wobei die Anforderungs- und Antwortrahmen jeweils ein Präambelfeld, ein Kopffeld und ein Nutzdatenfeld aufweisen,
wobei das Präambelfeld einer Manchester-Codierung mit einer Datenrate von 1 kbps und dann einer BPSK-Modulation unterzogen wird,
wobei das Kopffeld einen Bereich, der die Datenrate und das Codierungsverfahren des Nutzdatenfelds anzeigt, einen Bereich, der die Datenlänge des Nutzdatenfelds anzeigt, und eine Kopfprüfsequenz (HCS) aufweist,
wobei das Kopffeld einer Manchester-Codierung mit einer Datenrate von 1 kbps und dann einer binären Phasenumtastungs- (BPSK) Modulation unterzogen wird.

2. Verfahren nach Anspruch 1, wobei das Nutzdatenfeld einen Datenbereich von 0-255 Byte und eine Rahmenprüfsequenz von 2 Byte aufweist.

3. Verfahren nach Anspruch 2, wobei das Nutzdatenfeld selektiv einer Manchester-Codierung mit einer Datenrate von 1, 2 oder 4 kbps oder einer NRZ-L-Codierung mit einer Datenrate von 2, 4 oder 8kbps und dann einer BPSK-Modulation unterzogen wird.

4. Verfahren nach Anspruch 3, wobei Ergebnisse der NRZ-L-Codierung verwürfelt werden und dann der BPSK-Modulation unterzogen werden.

5. Computerlesbares Aufzeichnungsmedium, das ein Programm zum Ausführen des Verfahrens nach einem der Ansprüche 1 bis 4 speichert.

## Revendications

1. Procédé de configuration d'une couche physique pendant une communication sans fil par champ magnétique à basse fréquence, où un débit de données et un procédé de codage d'un champ de charge utile compris dans chacune des trames de demande et de réponse échangées entre un maître et un esclave peut être modifié en fonction d'un environnement de communication ambiant à l'intérieur d'une plage définie,
où le procédé de codage recourt à un codage NRZ-L si l'environnement de communication est déterminé comme satisfaisant, et à un codage Manchester si l'environnement de communication est déterminé comme médiocre,
où les trames de demande et de réponse sont configurées avec un format identique,
où les trames de demande et de réponse comprennent chacune un champ de préambule, un champ d'en-tête et un champ de charge utile,
où le champ de préambule est soumis au codage Manchester à un débit de données de 1 kbps puis à une modulation BPSK,
où le champ d'en-tête comprend une zone indicative du débit de données et du procédé de codage le champ de charge utile, une zone indicative de la longueur de données du champ de charge utile, et une séquence de contrôle d'en-tête (HCS),
où le champ d'en-tête est soumis au codage Manchester à un débit de données de 1 kbps puis à une modulation par déplacement de phase binaire (BPSK).

2. Procédé selon la revendication 1, où le champ de charge utile comprend une zone de données de 0 à 255 octets et une séquence de contrôle de trame de 2 octets.

3. Procédé selon la revendication 2, où le champ de charge utile est soumis sélectivement à un codage Manchester à un débit de données de 1, 2 ou 4kbps ou un codage NRZ-L à un débit de données de 2, 4 ou 8kbps, puis à une modulation BPSK.

4. Procédé selon la revendication 3, où le résultat du codage NRZ-L est crypté puis soumis à la modulation BPSK.

5. Support d'enregistrement lisible par ordinateur, stockant un programme pour l'exécution du procédé selon l'une des revendications 1 à 4.
